# EUROPEAN PATENT APPLICATION

(11) **EP 4 521 769 A1**
(43) Date of publication of application: **12.03.2025**
(21) Application number: 24193543.6
(22) Date of filing: 08.08.2024
(51) Int. Cl.: H04N 25/46, H04N 25/773, H04N 25/42, H04N 25/44

(54) **PHOTOELECTRIC CONVERSION DEVICE, MOVABLE APPARATUS, CONTROL METHOD, AND STORAGE MEDIUM**

(30) Priority: 11.09.2023 JP 2023146835
(71) Applicant: CANON KABUSHIKI KAISHA, Tokyo 146-8501 (JP)
(72) Inventor: KIMURA, Takayuki, Tokyo 146-8501 (JP)
(74) Representative: TBK

(57) **Abstract**

A photoelectric conversion device includes: a photoelectric conversion element configured to generate an image signal corresponding to an incident light quantity; a visual-recognition image processing unit configured to perform visual-recognition image processing to generate an image for visual recognition; an image-recognition image processing unit configured to perform image-recognition image processing to generate an image for image recognition; and a control unit configured to perform control such that image processing is performed on the image signal generated by the photoelectric conversion element using at least one of the visual-recognition image processing unit and the image-recognition image processing unit.

## Description

### BACKGROUND OF THE INVENTION

### Field of the Invention

The present invention relates to a photoelectric conversion device, a movable apparatus, a control method, and a storage medium.

### Description of the Related Art

In recent years, a photoelectric conversion device that digitally counts the number of photons incident on an avalanche photodiode (APD) and outputs the counted value as a photoelectrically converted digital signal from pixels has been developed. For example, Japanese Patent No. 7223070 discloses a configuration of a photoelectric conversion device including APDs that can output a plurality of images of which accumulation periods overlap each other and thus enable consecutive imaging even at low illuminance.

However, for example, when an imaging device for an onboard camera installed in a movable apparatus is assumed, a recognition process is performed frame by cannot be helped that the recognition process is performed, for example, every 33.3 ms in the case of 30 fps. Accordingly, in the onboard camera, if an object jumps in immediately after a frame has changed, the recognition process cannot be performed until the current frame ends.

Many onboard cameras have an accumulation period equal to or greater than a predetermined period (11 ms) to curb flickering due to traffic signals and capture a bright image particularly by lengthening the accumulation period at low illuminance. However, since the accumulation period is long, subject blurring occurs in an object moving fast and thus a recognition rate thereof is lowered.

### SUMMARY OF THE INVENTION

According to one aspect of the present invention, there is provided a photoelectric conversion device including: a photoelectric conversion element configured to generate an image signal corresponding to an incident light quantity; a visual-recognition image processing unit configured to perform image processing to generate an image for visual recognition; an image-recognition image processing unit configured to perform image processing to generate an image for image recognition; and a control unit configured to perform control such that image processing is performed on the image signal generated by the photoelectric conversion element using at least one of the visual-recognition image processing unit and the image-recognition image processing unit.

Further features of the present invention will become apparent from the following description of embodiments with reference to the attached drawings.

### BRIEF DESCRIPTION OF THE DRAWINGS

Fig. 1 is a diagram illustrating an example of a configuration of a photoelectric conversion element 100 according to a first embodiment.
Fig. 2 is a diagram illustrating an example of a configuration of a sensor board 11 according to the first embodiment.
Fig. 3 is a diagram illustrating an example of a configuration of a circuit board 21 according to the first embodiment.
Fig. 4 is a diagram illustrating an equivalent circuit of a photoelectric conversion unit 102 and a signal processing circuit 103 corresponding to the photoelectric conversion unit 102 in Figs. 2 and 3.
Fig. 5 is a diagram schematically illustrating a relationship between an operation of an APD 201 and an output signal.
Fig. 6 is a functional block diagram of a photoelectric conversion device 600 and a movable apparatus 700 according to the first embodiment.
Fig. 7A is a functional block diagram illustrating an example of a configuration of a visual-recognition image processing unit 603 according to the first embodiment, and Fig. 7B is a functional block diagram illustrating an example of a configuration of an image-recognition image processing unit 604 according to the first embodiment.
Fig. 8 is a diagram illustrating an example of performance such as quality of a visual-recognition image, recognition processing performance, and power consumption of a photoelectric conversion element 100, an image processing selecting unit 602, a visual-recognition image processing unit 603, and an image-recognition image processing unit 604 under various control conditions.
Fig. 9 is a diagram illustrating processes from photoelectric conversion to image output and recognition result output that are performed by a camera control unit 606 according to the first embodiment.
Fig. 10 is a diagram illustrating an example of an image in a plurality of accumulation subperiods according to the first embodiment.
Fig. 11 is a diagram illustrating a relationship between a memory and a buffer according to the first embodiment.
Fig. 12 is a flowchart specifically illustrating a driving example of the photoelectric conversion element according to the first embodiment.
Fig. 13 is a flowchart subsequent to the flowchart illustrated in Fig. 12.
Fig. 14 is a flowchart subsequent to the flowchart illustrated in Fig. 13.
Fig. 15 is a flowchart subsequent to the flowchart illustrated in Fig. 14.
Fig. 16 is a functional block diagram of an example in which the visual-recognition image processing unit 603 and the image-recognition image processing unit 604 are partially shared according to a second embodiment.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### <First embodiment>

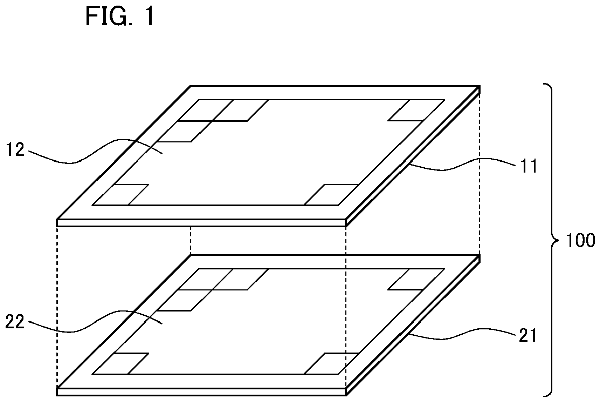

Fig. 1 is a diagram illustrating an example of a configuration of a photoelectric conversion element 100 according to a first embodiment of the present invention. In the following description, a photoelectric conversion element that generates an image signal corresponding to an incident light quantity has a so-called stacked structure in which two boards including a sensor board 11 and a circuit board 21 are stacked and electrically connected.

However, a so-called non-stacked structure in which elements included in the sensor board 11 and elements included in the circuit board 21 are provided in a common semiconductor layer may be employed. The sensor board 11 includes a pixel area 12. The circuit board 21 includes a circuit area 22 for processing a signal detected in the pixel area 12.

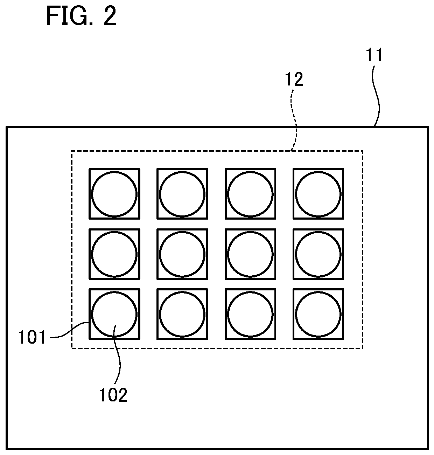

Fig. 2 is a diagram illustrating an example of a configuration of the sensor board 11 according to the first embodiment of the present invention. The pixel area 12 of the sensor board 11 includes a plurality of pixels 101 which are arranged two-dimensionally in directions of a plurality of rows and a plurality of columns.

Each pixel 101 includes a photoelectric conversion unit 102 including an avalanche photodiode (hereinafter referred to as an APD). Here, the photoelectric conversion unit 102 emits a pulse at a frequency corresponding to a photon reception frequency. That is, the photoelectric conversion unit 102 emits a pulse at a frequency corresponding to a photon reception frequency. The number of rows and the number of columns in a pixel array constituting the pixel area 12 are not particularly limited.

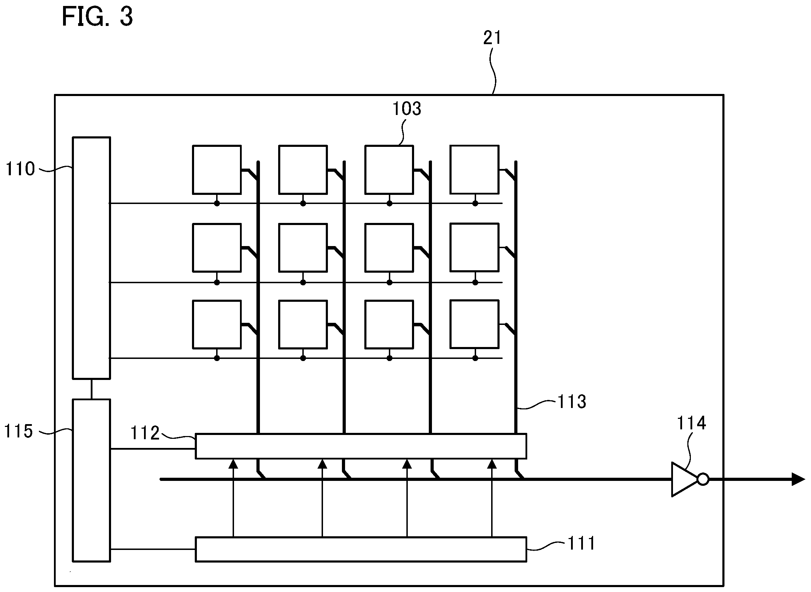

Fig. 3 is a diagram illustrating an example of a configuration of the circuit board 21 according to the first embodiment of the present invention. The circuit board 21 includes a signal processing circuit 103 for processing electric charges photoelectrically converted by the corresponding photoelectric conversion unit 102 in Fig. 2, a reading circuit 112, a control pulse generator 115, a horizontal scanning circuit 111, a vertical signal line 113, a vertical scanning circuit 110, and an output circuit 114.

The vertical scanning circuit 110 receives a control pulse supplied from the control pulse generator 115 and sequentially supplies the control pulse to a plurality of pixels arranged in the row direction. A logic circuit such as a shift register or an address decoder is used for the vertical scanning circuit 110.

A signal output from the photoelectric conversion unit 102 of each pixel is processed by the corresponding signal processing circuit 103. The signal processing circuit 103 is provided with a counter, a memory, and the like, and a digital value is stored in the memory. The horizontal scanning circuit 111 inputs a control pulse for sequentially selecting a column to the signal processing circuits 103 to read signals from the memories of the pixels storing a digital signal.

Signals from the signal processing circuits 103 of the pixels in the row selected by the vertical scanning circuit 110 are output to the vertical signal lines 113. The signals output to the vertical signal lines 113 are output to the outside of the photoelectric conversion element 100 via the reading circuit 112 and the output circuit 114. A plurality of buffers connected to the vertical signal lines 113 are incorporated into the reading circuit 112.

The control pulse generator 115 may perform control such that the vertical scanning circuit 110 performs non-addition reading of sequentially reading all the rows or may perform control such that the vertical scanning circuit 110 performs thinning-out reading of selecting a row to be read every several rows when it is intended to reduce an amount of data of a signal to be read.

Alternatively, control may be performed such that addition (average) reading of reading pixel signals of a plurality of neighboring rows as one equivalent pixel signal by performing processing such as addition averaging is performed. At that time, the number of pixels to be addition averaged may be 2×2 pixels or 4×4 pixels, and the numbers of pixels to be added in both the row direction and the column direction may be freely changed. Alternatively, in order to reduce an amount of data of a signal to be read, control may be performed such that crop reading of selecting and reading only a partial image area (viewing angle) is performed.

As illustrated in Figs. 2 and 3, a plurality of signal processing circuits 103 are arranged in an area overlapping the pixel area 12 in a plan view. The vertical scanning circuit 110, the horizontal scanning circuit 111, the reading circuit 112, the output circuit 114, and the control pulse generator 115 are arranged to overlap an area outside of the pixel area 12 of the sensor board 11 in a plan view.

That is, the sensor board 11 includes the pixel area 12 and a non-pixel area disposed around the pixel area 12. The vertical scanning circuit 110, the horizontal scanning circuit 111, the reading circuit 112, the output circuit 114, and the control pulse generator 115 are arranged in an area overlapping the non-pixel area in a plan view.

Arrangement of the vertical signal lines 113 and arrangement of the reading circuit 112 and the output circuit 114 are not limited to the example illustrated in Fig. 3. For example, the vertical signal lines 113 may be disposed to extend in the row direction, and the reading circuit 112 may be disposed forward in the extending direction of the vertical signal lines 113.

The signal processing circuit 103 does not have to be provided for each photoelectric conversion unit, and a configuration in which one signal processing circuit is shared by a plurality of photoelectric conversion unit and signal processing is sequentially performed thereon may be employed.

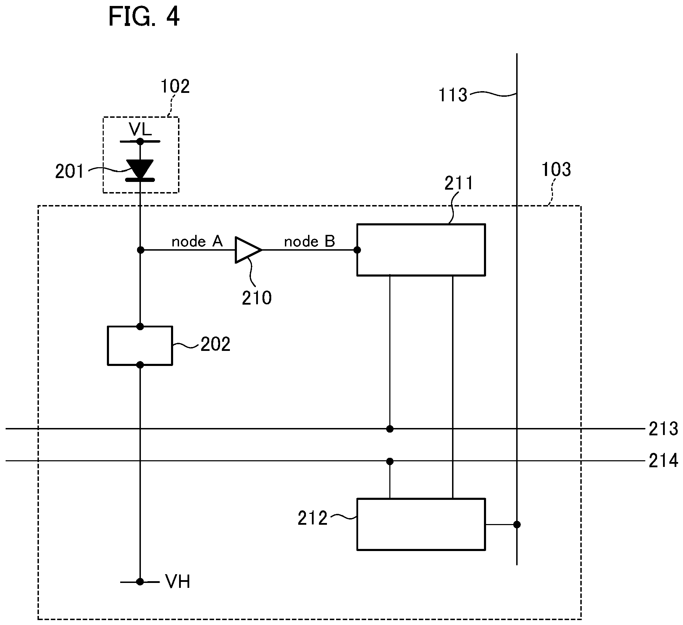

Fig. 4 is a diagram illustrating an equivalent circuit of a photoelectric conversion unit 102 and a signal processing circuit 103 corresponding to the photoelectric conversion unit 102 in Figs. 2 and 3. Each pixel includes the photoelectric conversion unit 102 and the signal processing circuit 103. The APD 201 included in each photoelectric conversion unit 102 generates electric charge pairs corresponding to incident light through photoelectric conversion.

One of two nodes of the APD 201 is connected to a power supply line for supplying a drive voltage VL (a first voltage). The other of the two nodes of the APD 201 is connected to a power supply line for supplying a drive voltage VH (a second voltage) which is higher than the voltage VL via a quench element 202.

In Fig. 4, one node of the APD 201 is an anode, and the other node of the APD 201 is a cathode. The anode and the cathode of the APD 201 are supplied with a reverse bias voltage for allowing the APD 201 to perform an avalanche multiplication operation. By supplying this reverse bias voltage, electric charges generated by incident light cause avalanche multiplication, and an avalanche current is generated.

When the reverse bias voltage is supplied, there are a Geiger mode in which a voltage difference between the anode and the cathode is greater than a breakdown voltage and a linear mode in which the voltage difference between the anode and the cathode is a voltage difference close to the breakdown voltage or equal to or less than the breakdown voltage. The APD that operates in the Geiger mode is referred to as an SPAD. In the SPAD, for example, the voltage VL (the first voltage) is -30 V, and the voltage VH (the second voltage) is 1 V

Each signal processing circuit 103 includes a quench element 202, a waveform shaping circuit 210, a counter circuit 211, and a memory circuit 212. The quench element 202 is connected to the power supply line for supplying the drive voltage VH and one node of the anode and the cathode of the APD 201.

The quench element 202 serves as a load circuit (a quench circuit) at the time of multiplication of a signal through avalanche multiplication and has a function of curbing a voltage supplied to the APD 201 to curb the avalanche multiplication (a quench operation). The quench element 202 also has a function of returning the voltage supplied to the APD 201 to the drive voltage VH by causing a current corresponding to a voltage drop due to the quench operation to flow therein (a recharge operation).

In the example illustrated in Fig. 4, the signal processing circuit 103 includes the waveform shaping circuit 210, the counter circuit 211, and the memory circuit 212 in addition to the quench element 202. The waveform shaping circuit 210 shapes a voltage change of the cathode of the APD 201 which is acquired at the time of detection of photons and outputs a pulse signal.

For example, an inverter circuit is used as the waveform shaping circuit 210. In the example illustrated in Fig. 4, one inverter is used as the waveform shaping circuit 210, but a circuit in which a plurality of inverters are connected in series may be used or another circuit with a waveform shaping effect may be used.

The counter circuit 211 counts the number of pulses output from the waveform shaping circuit 210 and stores the count value. When a control pulse RES is supplied via a drive line 213, a signal stored in the counter circuit 211 is reset. Here, the counter circuit 211 generates a signal based on a difference in the count value between the start timing and the end timing of the accumulation period.

The memory circuit 212 is supplied with a control pulse SEL from the vertical scanning circuit 110 illustrated in Fig. 3 via a drive line 214 in Fig. 4 (not illustrated in Fig. 3) to switch between electrical connection and disconnection between the counter circuit 211 and the vertical signal line 113. The memory circuit 212 serves as a memory for temporarily storing the count value of the counter and outputs an output signal from the counter circuit 211 of the corresponding pixel to the vertical signal line 113.

The memory circuit 212 may be electrically connected to the counter circuit in another signal processing circuit (not illustrated in Fig. 4) adjacent to the signal processing circuit 103 illustrated in Fig. 4 and perform processing such as addition averaging. With this configuration, a plurality of pixel signals generated by a plurality of photoelectric conversion unit can be generated as an output corresponding to one pixel signal, and it is possible to reduce an amount of data of a pixel output signal.

Alternatively, switching may be performed between a case in which the memory circuit 212 is connected to only one counter circuit 211 and non-addition processing is performed and a case in which the memory circuit 212 is connected to a plurality of counter circuits and addition averaging is performed.

A switch such as a transistor may be provided between the quench element 202 and the APD 201 or between the photoelectric conversion unit 102 and the signal processing circuit 103 to switch an electrical connection therebetween. Similarly, supply of the voltage VH or the voltage VL to the photoelectric conversion unit 102 may be electrically switched using a switch such as a transistor.

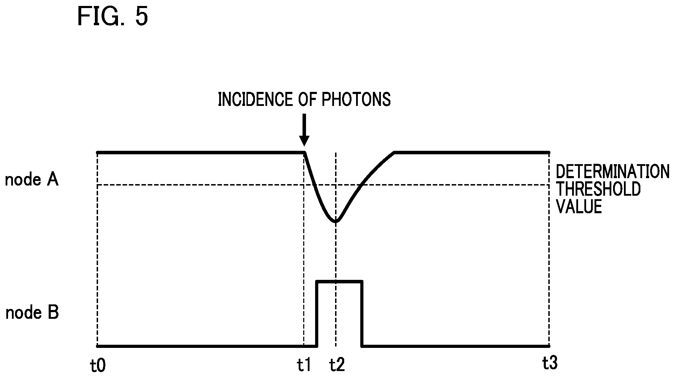

Fig. 5 is a diagram schematically illustrating a relationship between the operation of the APD 201 and the output signal. An input side of the waveform shaping circuit 210 is defined as node A and an output side thereof is defined as node B. Between time t0 and time 11, a potential difference VH-VL is applied to the APD 201. When photons are incident on the APD 201 at time 11, avalanche multiplication occurs in the APD 201, an avalanche multiplication current flows in the quench element 202, and the voltage of node A drops.

When the voltage drop increases and the potential difference applied to the APD 201 decreases, the avalanche multiplication of the APD 201 stops as at time t2, and the voltage level of node A does not drop to a predetermined value or lower.

Thereafter, between time t2 and time t3, a current for complementing for the voltage drop from the voltage VL flows in node A, and node A is statically determined to have the original potential level at time t3. At this time, a part in which an output waveform at node A is exceeds a predetermined threshold value is shaped by the waveform shaping circuit 210 and is output as a pulse signal to node B.

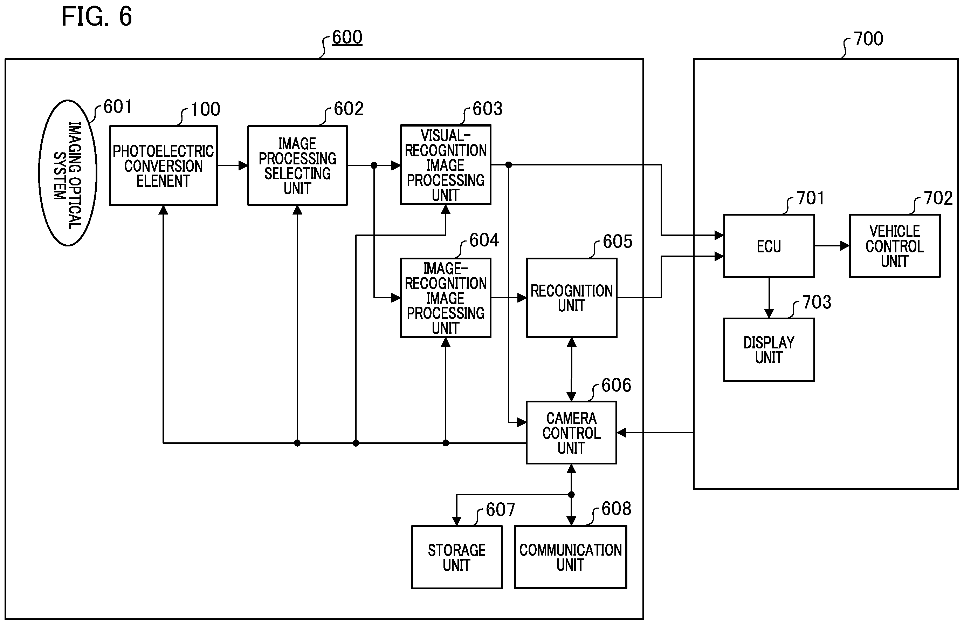

A photoelectric conversion device 600 and a movable apparatus 700 according to the first embodiment will be described below. Fig. 6 is a functional block diagram of the photoelectric conversion device 600 and the movable apparatus 700 according to the first embodiment. Some of functional blocks illustrated in Fig. 6 are realized by causing a computer (not illustrated) included in the photoelectric conversion device 600 and the movable apparatus 700 to execute a computer program stored in a memory which is a storage medium which is not illustrated.

However, some or all of the functional blocks may be realized by hardware. A dedicated circuit (ASIC), a processor (such as a reconfigurable processor or a DSP), or the like can be used as the hardware.

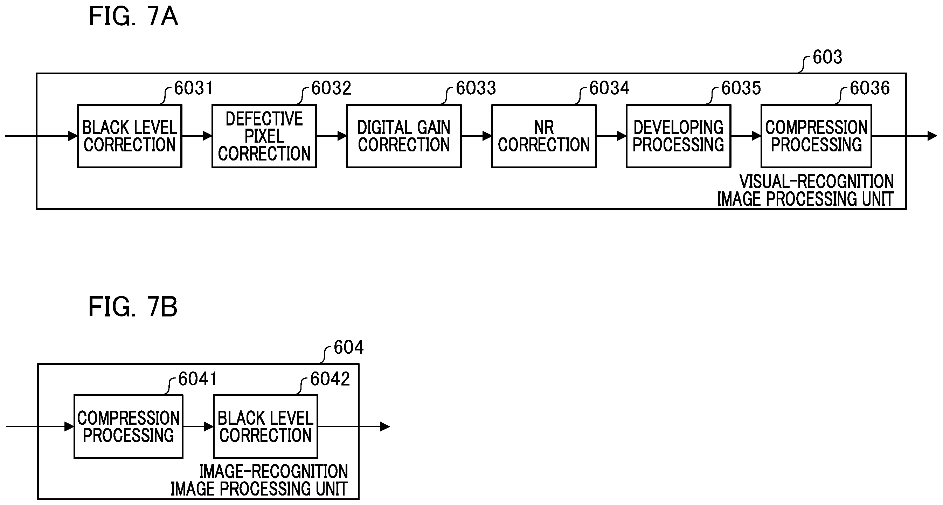

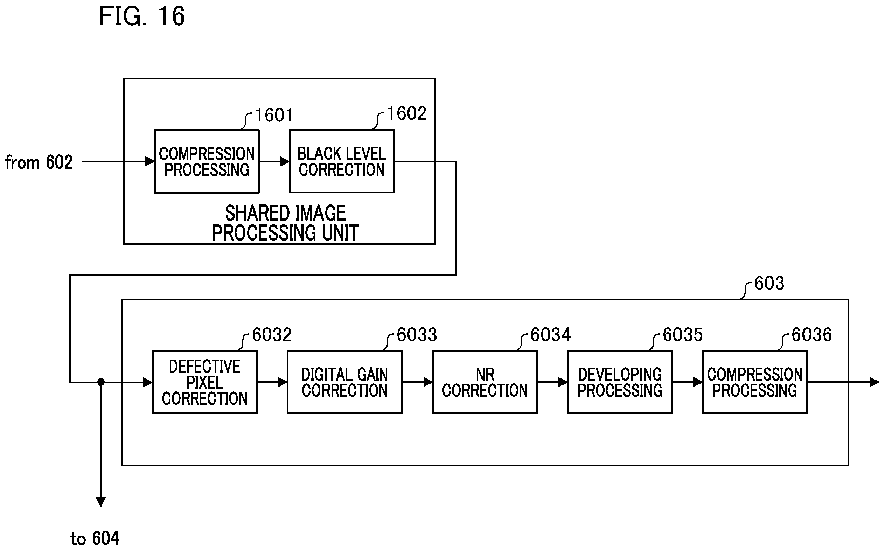

The functional blocks illustrated in Fig. 6 may not be incorporated into the same housing and may be realized by different devices connected to each other via a signal line. Description with reference to Fig. 6 is true of functional blocks illustrated in Figs. 7A, 7B, and 16.

The photoelectric conversion device 600 includes the photoelectric conversion element 100 described above with reference to Figs. 1 to 5, an imaging optical system 601, an image processing selecting unit 602, a visual-recognition image processing unit 603, an image-recognition image processing unit 604, a recognition unit 605, a camera control unit 606, a storage unit 607, and a communication unit 608.

The photoelectric conversion element 100 includes avalanche photodiodes described above with reference to Figs. 1 to 5 for photoelectrically converting an optical image. The photoelectric conversion element 100 can switch among a plurality of reading methods such as non-addition reading of reading all pixels based on a control signal from the camera control unit without any change, addition (average) reading of addition-averaging and reading neighboring pixels, and thinning-out reading of thinning out and reading pixels.

It is preferable that non-addition reading be performed on an image output from the photoelectric conversion element 100 when a high resolution is required and addition (average) reading or thinning-out reading be performed on the image when a high image output speed is required rather than a resolution.

For example, when addition (average) reading of 2×2 pixels is performed, pixel count values corresponding to four pixels are artificially converted to a count value corresponding to one pixel. Accordingly, an amount of data to be read is reduced to 1/4, and a time required for reading an image signal is reduced to 1/4.

That is, when addition (average) reading of 2×2 pixels is performed, an image signal can be read at a speed which is four times a speed when non-addition reading is performed.

In the present embodiment, the photoelectric conversion device 600 is mounted in a movable apparatus, and an image output from the photoelectric conversion element 100 is used for two applications for visual recognition and image recognition. An image acquired for visual recognition is used for a driver to visually recognize an image under various environments using a display means or the like or to recognize a traffic signal, a sign, a lane marking, or the like. Accordingly, high image quality such as a high resolution, low noise, and a high contrast is required.

On the other hand, an image acquired for image recognition is used to recognize rushing of a person, a vehicle, or the like as early as possible. Accordingly, a decrease in delay time (speeds of image output, image processing, and recognition processing) until a subject is recognized after rushing of the subject or the like has occurred is required above all.

That is, when an image is output from the photoelectric conversion element 100, it is preferable that an image for image recognition be read using addition (average) reading of 2×2 pixels and an image for visual recognition be read using non-addition reading. In the present embodiment, addition (average) reading is performed to read an image-recognition image, and non-addition reading is performed to read a visual-recognition image. A specific reading method will be described later.

The photoelectric conversion element according to the embodiment is mounted in the movable apparatus 700, and a camera unit including a set of the imaging optical system 601 and the photoelectric conversion element 100 is configured to image, for example, at least one of a forward view, a rearward view, and a side view of the movable apparatus. A plurality of camera units may be provided at a plurality of positions of the movable apparatus 700.

The image processing selecting unit 602 serves to control whether an image signal output from the photoelectric conversion element 100 is to be output to the visual-recognition image processing unit 603 or the image-recognition image processing unit 604.

In the present embodiment, the camera control unit 606 validates only the visual-recognition image processing unit 603 when the image signal output from the photoelectric conversion element 100 is for visual recognition and validates only the image-recognition image processing unit 604 when the image signal is for image recognition. Both of the visual-recognition image processing unit 603 and the image-recognition image processing unit 604 may be validated or invalidated according to necessity.

Validation in the present embodiment means that a circuit operation is turned on, invalidation means that a circuit operation is turned off, and supply of electric power from a power supply unit may be performed even in the case of invalidation. The camera control unit performs control such that image processing is performed on an image signal generated by photoelectric conversion units using at least one of the visual-recognition image processing unit 603 and the image-recognition image processing unit 604.

When both the visual-recognition image processing unit 603 and the image-recognition image processing unit 604 are used, a full-frame image can be processed by the visual-recognition image processing unit 603 and a recognition process can also be performed on the full-frame image by the image-recognition image processing unit 604 in parallel.

Accordingly, for example, when a process load of the visual-recognition image generating process is large and display is delayed, a recognition process is performed by the image-recognition image processing unit 604 and thus control of a vehicle is less likely to be affected than when generation of a visual-recognition image and a recognition process are performed by one image processing unit.

The visual-recognition image processing unit 603 will be described below with reference to Fig. 7A. Fig. 7A is a functional block diagram illustrating an example of a configuration of the visual-recognition image processing unit 603 according to the first embodiment. The visual-recognition image processing unit 603 is a processing unit configured to perform image processing to generate an image suitable for visual recognition.

Accordingly, the visual-recognition image processing unit 603 performs, for example, image processing such as black level correction 6031, defective pixel correction 6032, digital gain correction 6033, noise reduction (NR) correction 6034, developing processing 6035, and compression processing 6036 on an image signal. Then, the visual-recognition image processing unit 603 generates a final image signal. In this way, the visual-recognition image processing unit 603 has a function of correcting a defective pixel.

In the present embodiment, the photoelectric conversion element 100 is of a monochrome (without a color filter), but when on-chip color filters of RGB or the like are provided, it is preferable that the visual-recognition image processing unit 603 perform processing such as white balance correction and color conversion.

Since image processing for enhancement in image quality is required for the visual-recognition image processing unit 603, other image processing may be performed according to necessity. An image subjected to various types of image processing by the visual-recognition image processing unit 603 is supplied to an electronic control unit (ECU) 701 and the camera control unit 606 of the movable apparatus 700.

The image-recognition image processing unit 604 will be described below with reference to Fig. 7B. Fig. 7B is a functional block diagram illustrating an example of a configuration of the image-recognition image processing unit 604 according to the first embodiment. The image-recognition image processing unit 604 is a processing unit configured to perform image processing to generate an image suitable for image recognition and requires a high processing speed (a short delay time) of image processing. Accordingly, it is preferable to perform compression processing of minimizing an amount of data of an image signal in as an early stage as possible.

For example, a resolution may be reduced or a bit depth may be reduced by adding (averaging) or thinning out pixels. When the number of image processing functions is increased, a delay time also increases and thus it is necessary to minimize the number of image processing functions.

In the present embodiment, two types of image processing including compression processing 6041 and black level correction 6042 are performed to generate an image signal to be output to the recognition unit 605. That is, the image-recognition image processing unit 604 includes at least a compression unit configured to reduce an amount of data of an image signal generated by the photoelectric conversion element. The image-recognition image processing unit 604 also has a function of correcting a black level.

The compression unit reduces an amount of data, for example, by adding or addition-averaging pixel values of a plurality of pixels. Alternatively, the compression unit reduces an amount of data by thinning out pixels in rows or columns of the photoelectric conversion element. The image-recognition image processing unit 604 may reduce an amount of data by cutting out pixels in a partial area of the photoelectric conversion element. Other image processing is determined on the basis of specifications of the recognition unit 605 located in a subsequent stage.

For example, when a convolutional neural network (CNN) is used for the recognition unit 605, an optimal image processing method other than the compression processing 6041 needs to be changed depending on what image data is used for the recognition unit 605 to perform learning.

For example, when all the image data used for the recognition unit 605 to perform learning has been subjected to black level correction, black level correction 6042 is preferably performed after the compression processing 6041 in the image-recognition image processing unit 604.

When a black level of an image output from the photoelectric conversion element 100 has been changed due to a change in environmental temperature or the like without performing the black level correction 6042, recognition accuracy is lowered. When the recognition unit 605 performs learning in consideration of a difference in black level, the image-recognition image processing unit 604 does not need to perform the black level correction 6042, but the circuit scale of the recognition unit 605 may be increased.

That is, it is preferable that specifications of the image-recognition image processing unit 604 be determined in consideration of balance such as the whole circuit scale of the photoelectric conversion device 600. In the present embodiment, the image-recognition image processing unit 604 reduces an amount of data to, for example, 1/4 using the compression processing 6041, corrects a black level using the black level correction 6042, and then outputs the resultant image to the recognition unit 605.

The recognition unit 605 serves to rapidly recognize rushing of a person, an animal, a vehicle, or the like located near the movable apparatus 700 by performing image recognition based on the image signal output from the image-recognition image processing unit 604. The recognition unit 605 according to the present embodiment uses a CNN as a recognition method as described above, and an object of image data to be learned is limited to only a subject that is likely to rush suddenly.

This is for optimizing image processing using the image-recognition image processing unit 604 or recognition processing using the recognition unit 605 for a rushing subject and increasing in speed and accuracy of the recognition processing. When a fixed subject which has only to be recognized in the units of frames such as a traffic signal, a sign, or a lane marking is recognized, a recognition unit for recognizing the fixed subject may be separately provided, for example, in a stage subsequent to the visual-recognition image processing unit 603 or the movable apparatus 700.

Since a far traffic signal, characters of a sign, and the like may be recognized in the units of frames in time, a visual-recognition image subjected to image processing with high image quality can be suitably used therefor. That is, the recognition unit 605 according to the present embodiment recognizes only a subject such as a movable object which is not in time with a recognition rate in the units of frames as a recognition target.

Here, a recognition target does not have to be distinguished as described above, and an object other than a rushing subject may be recognized using the recognition unit 605 according to necessity, or a rushing subject may be recognized using a recognition unit (not illustrated) other than the recognition unit 605.

The recognition result acquired by the recognition unit 605 is rapidly output to the ECU 701. In the present embodiment, the movable apparatus 700 is, for example, a vehicle, but the movable apparatus 700 is not particularly limited as long as it is a movable object such as an aircraft, a subway, a ship, a drone, an AGV, or a robot.

The camera control unit 606 includes a CPU which is a computer and a memory which stores a computer program and controls the constituents of the photoelectric conversion device 600 by causing the CPU to execute the computer program stored in the memory.

The camera control unit 606 serves as a control means and controls a length of an exposure period of each frame of the photoelectric conversion element 100, a timing of a control signal CLK, or the like, for example, via the control pulse generator of the photoelectric conversion element 100.

The camera control unit 606 transmits a control signal for switching a reading method when a pixel signal is read to the photoelectric conversion element 100. In the present embodiment, the reading method can switch between two reading methods including addition (average) reading and non-addition reading in one frame.

The camera control unit 606 has a function of controlling the image processing selecting unit 602, the visual-recognition image processing unit 603, the image-recognition image processing unit 604, and the recognition unit 605. The camera control unit 606 also has a function of acquiring an image signal output from the visual-recognition image processing unit 603 or a recognition result when the recognition unit 605 has performed a recognition process.

The storage unit 607 includes a recording medium such as a memory card or a hard disk and can store and read an image signal. The communication unit 608 includes a wireless or wired interface, outputs the generated image signal or the recognized result to the outside of the photoelectric conversion device 600, and receives various types of signals from the outside. For example, the interface may perform wired communication based on the standard such as SPI or 12C or use a wireless LAN system such as Wi-Fi, Bluetooth (registered trademark), or the like.

The ECU 701 includes a CPU which is a computer and a memory which stores a computer program and controls the constituents of the movable apparatus 700 by causing the CPU to execute the computer program stored in the memory.

An output of the ECU 701 is supplied to a vehicle control unit 702 and a display unit 703. The vehicle control unit 702 serves as a movement control unit configured to control operations such as driving, stopping, and direction control of a vehicle which is the movable apparatus 700 on the basis of the output of the ECU 701.

The display unit 703 serves as a display means, includes a display device such as a liquid crystal device or an organic EL display, and is mounted in the movable apparatus 700. The display unit 703 displays an image acquired by the photoelectric conversion element 100, a recognition result acquired by the recognition unit 605, and various types of information such as a traveling state of a vehicle to a driver of the movable apparatus 700, for example, using a GUI on the basis of the output of the ECU 701.

The image processing selecting unit 602, the visual-recognition image processing unit 603, the image-recognition image processing unit 604, the recognition unit 605, and the like illustrated in Fig. 6 may not be mounted in the movable apparatus 700. For example, these constituent units may be provided in an external terminal for controlling the movable apparatus 700 or monitoring traveling of the movable apparatus, which is provided separately from the movable apparatus 700.

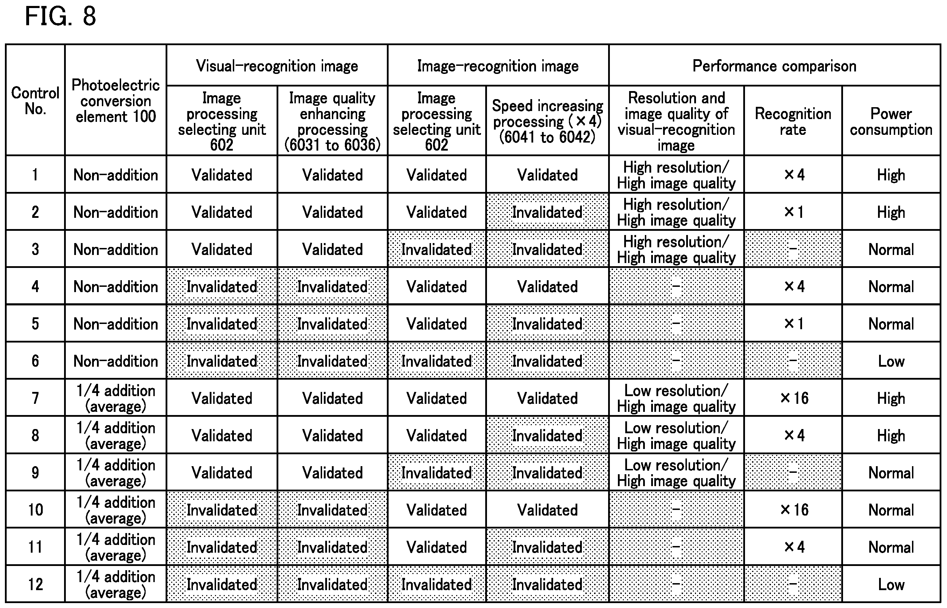

Control specifications of the functional blocks in this system will be described below with reference to Fig. 8. Fig. 8 is a diagram illustrating an example of performance such as quality of a visual-recognition image, recognition processing performance, and power consumption of the photoelectric conversion element 100, the image processing selecting unit 602, the visual-recognition image processing unit 603, and the image-recognition image processing unit 604 under various control conditions.

A reading method is described in an entry field of "photoelectric conversion element 100." Specifically, one of non-addition reading and 1/4 addition (average) reading is described.

A state of the image processing selecting unit 602 and a state of the visual-recognition image processing unit 603 are described in an entry field of "visual-recognition image." Specifically, the field of the image processing selecting unit 602 indicates whether an output from the visual-recognition image processing unit 603 is validated, and the field of image quality enhancing processing (6031 to 6036) indicates whether image processing for enhancing image quality using the visual-recognition image processing unit 603 is validated.

In the present embodiment, the image quality enhancement processing (6031 to 6036) is necessarily performed when the visual-recognition image processing unit 603 is validated.

In the entry field of "image-recognition image," a state of the image processing selecting unit 602 and states of speed increase processing (×4) (6041 to 6042) are described. Specifically, the field of the image processing selecting unit 602 indicates whether an output of the visual-recognition image processing unit 603 is validated, and the field of speed increase processing (×4) (6041 to 6042) indicates whether image processing for increasing a speed using the image-recognition image processing unit 604 is validated.

In the present embodiment, a case in which speed increase processing (×4) (6041 to 6042) is performed and a case in which speed increase processing (×4) (6041 to 6042) is not performed are provided in the state in which the image processing selecting unit 602 is validated. The reading method using the photoelectric conversion element 100 and the data compressing method using the image-recognition image processing unit 604 are properly used according to system specifications. Ideally, it is preferable that data compression be performed in as an early stage as possible.

Image quality of a visual-recognition image, a recognition speed, and power consumption in control states of the aforementioned 12 patterns are described in an entry field of "performance comparison."

In the present embodiment, system control based on control No. 3 in which the image quality is the highest and the power consumption is curbed is performed on a frame in which a visual-recognition image is generated, and system control based on control No. 10 in which the recognition processing is performed at a highest speed and the power consumption is curbed is performed on a frame in which the recognition processing is performed. In the present embodiment, even when an amount of image data of a subject for performing the recognition processing is reduced to 1/16 of the amount of image data at the time of non-addition reading (normal reading), it is possible to satisfactorily recognize rushing of a person, a vehicle, or the like.

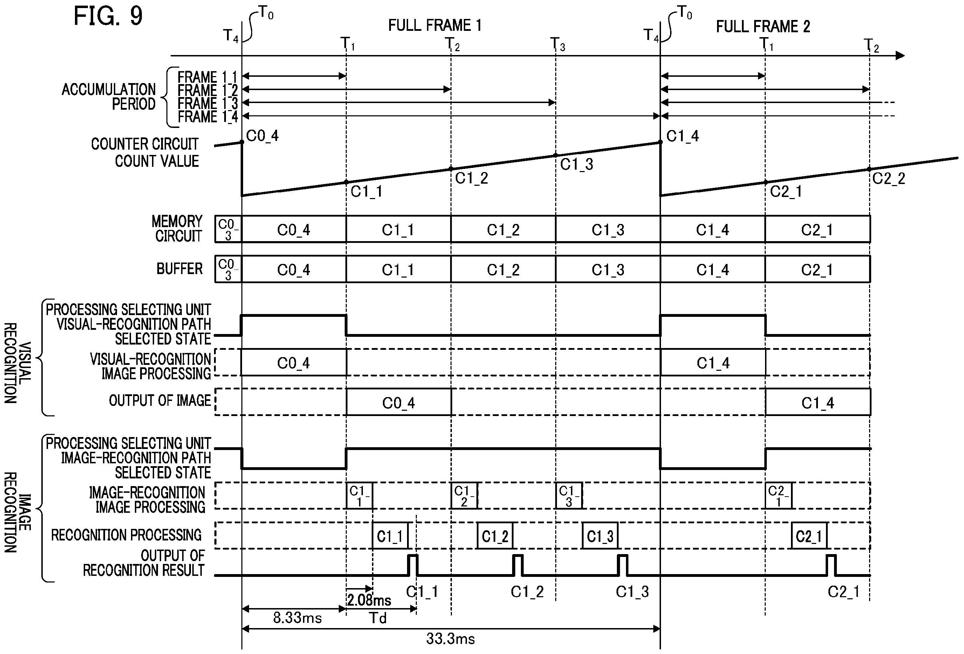

Fig. 9 is a diagram illustrating processes from photoelectric conversion to image output and recognition result output that are performed by the camera control unit 606 according to the first embodiment. In the present embodiment, photoelectric conversion is periodically driven, for example, at 30 full-frames/second.

In the present embodiment, a frame corresponding to one vertical period with a length of 33.3 ms is referred to as a full frame, and divisions of the full frame are referred to as frames. The length of the period of a full frame is not limited to the aforementioned example. The division number of the period of a full frame is not limited to 4.

In the present embodiment, the period of one full frame with a length of 33.3 ms is divided into four, and the photoelectric conversion element 100 sequentially generates three frames for an image-recognition image (frame 1_1, frame 1_2, and frame 1_3) and one frame for a visual-recognition image (frame 1_4).

System control is performed using a method based on control No. 10 for the three frames for an image-recognition image and using a method based on control No. 3 for the one frame for a visual-recognition image. As described above, an amount of image data read from the photoelectric conversion element 100 in the image-recognition image using addition (average) reading is 1/4 of that in the visual-recognition image using non-addition reading.

Accordingly, an image reading time has a 1/4 length. That is, the reading period for a visual-recognition image is 8.33 ms, and the reading period for an image-recognition image is 2.08 ms.

Frame 1_1 includes an accumulation period of from time T0 which is a start timing of a full frame 1 to time T1, and frame 1_2 includes an accumulation period of from time T0 to time T2. Frame 1_3 includes an accumulation period of from time T0 to time T3, and frame 1_4 includes an accumulation period of from time T0 to time T4.

A process flow from photoelectric conversion to recognition result output on an image of frame 1_1 used for image recognition will be first described below. The counter circuit 211 is reset at time T0, and a count value C1_1 is acquired using the method based on addition (average) reading at time T1.

In the present embodiment, monochromic pixels 101 are assumed, and a count value C1_1 obtained by calculating count values of four pixels adjacent to the counter circuit 211 using addition averaging is temporarily stored in the memory circuit 212.

For example, when a color filter with a Bayer array of R (red), Gr (green), Gb (green), and B (blue) is disposed on a light receiving surface of the pixels 101, the count value C1_1 is calculated by addition-averaging the count values of closest pixels of the same color. Then, the count value temporarily stored in the memory circuit 212 is output to the image processing selecting unit 602 from the photoelectric conversion element via a buffer of the reading circuit 112.

Since the visual-recognition image processing unit 603 is invalidated and the image-recognition image processing unit 604 is validated, the image processing selecting unit 602 outputs an image signal (the count value C1_1) of frame 1_1 to only the image-recognition image processing unit 604.

The image-recognition image processing unit 604 performs various types of image processing described above with reference to Fig. 7B and outputs the processing result to the recognition unit 605 without any change. The image-recognition image processing unit 604 performs data compression processing using the compression processing 6041 such that a minimum amount of data necessary for the recognition unit 605 is obtained. At that time, the resolution may be lowered or the bit depth may be lowered.

Accordingly, it is possible to increase a processing speed of subsequent image processing or recognition processing in the recognition unit 605. In the present embodiment, it is assumed that compression processing is performed to obtain 1/4 of an amount of data. After compression of image data has been performed using the compression processing 6041, a black level is corrected using the black level correction 6042.

Specifically, count value of light-blocked pixels, the black level is corrected by subtracting the black level from the count values of valid pixels, and C1_1 is output to the recognition unit 605.

An image of frame 1_1 is output to the recognition unit 605 in a period of from time T1 to time T1+2.08 ms, and output of an image signal corresponding to one frame is completed at time T1+2.08 ms. Then, a subject recognition processing is started by the recognition unit 605 at time T1+2.08 ms.

In the present embodiment, the recognition processing is started at a timing of time T2 at which image signals corresponding to one frame have been aligned, but the recognition processing may be sequentially performed for each line or for each pixel. In this way, by decreasing the processing unit for image recognition, it is possible to shorten a time until a recognition result is acquired.

Then, the recognition result is rapidly output to the ECU 701 at the same time as completion of the recognition processing. In the present embodiment, a shortest time required for the recognition processing and the output of the result thereof is defined as Td. At this time, the output of the recognition result based on the image of frame 1_1 can be transmitted to the movable apparatus 700 at a maximum speed at time T1+Td. The process flow of frame 1_1 has been described hitherto.

Thereafter, image-recognition images of frame 1_2 and frame 1_3 are also sequentially read in a period of from time T2 to time T2+2.08 ms and in a period of from time T3 to time T3+2.08 ms similarly to frame 1_1. Then, the recognition processing is sequentially started at time T2+2.08 ms and at time T3+2.08 ms, and output of the recognition result from the recognition unit 605 to the ECU 701 is completed at time T2+Td and at time T3+Td.

Subsequently, a process flow of frame 1_4 used for visual recognition will be described below. At time T0 of full frame 2, a count value C1_4 is acquired from the counter circuit 211 using non-addition reading. The acquired count value C1_4 is temporarily stored in the memory circuit 212. Then, the count value temporarily stored in the memory circuit 212 is output from the photoelectric conversion element to the image processing selecting unit 602 via the buffer of the reading circuit 112.

At this time, since the visual-recognition image processing unit 603 is validated and the image-recognition image processing unit 604 is invalidated, the image processing selecting unit 602 outputs an image signal (the count value C1_4) of frame 1_4 to only the visual-recognition image processing unit 603.

The visual-recognition image processing unit 603 performs various types of image processing described above and stores a finally generated image in the storage unit 607. When various types of image processing are completed, an image of frame 1_4 is output to the ECU 701 of the movable apparatus 700 in a period of from time T1 to time T2 of the full frame 2, and output of the image signal corresponding to all the lines is completed at time T2.

As described above, in the present embodiment, one full frame period includes an image-recognition accumulation period for generating an image-recognition image and a visual-recognition accumulation period for generating a visual-recognition image. The image-recognition accumulation period is shorter than the visual-recognition accumulation period, and control is performed such that an image signal generated in the image-recognition accumulation period is output between an end of the image-recognition accumulation period and an end of the visual-recognition accumulation period.

The visual-recognition image processing unit generates an image with higher image quality than the image-recognition image processing unit, and the image-recognition image processing unit generates an image at a higher speed than the visual-recognition image processing unit.

In the present embodiment, the recognition processing using the recognition unit 605 is not performed in consideration of that an amount of data of the image signal of frame 1_4 is large, but the recognition processing may be performed on the image signal of frame 1_4 according to necessity. Since the image signal of frame 1_4 has high contrast, low noise, and curbed LED flickering, the image signal of frame 1_4 is used for visual recognition above all.

However, by performing the recognition processing before reading the image signal of frame 1_4 as described above, it is possible to shorten a time of from switching of a full frame period to first recognition of an object. A subject moving fast which does not need to be acquired in the unit of full frames may be recognized. The process flow of frame 1_4 has been described hitherto.

In the present embodiment, addition (average) reading is performed by both the inside of the photoelectric conversion element 100 and the compression processing 6041 in the image-recognition image processing unit 604, but may be performed by only one. When pixel addition processing is performed in the photoelectric conversion element 100, a period in which an image signal is read from the photoelectric conversion element 100 can be shortened from 8.33 ms to 2.08 ms.

On the other hand, when the pixel addition processing is performed in the compression processing 6041, a period in which an image signal is read cannot be shortened, but the period Td in Fig. 9 can be shortened. In this way, the processing of reducing an amount of image data is optimized using one or both of the photoelectric conversion element 100 and the compression processing 6041 according to system specifications of the photoelectric conversion device 600. Accordingly, it is possible to realize an increase in speed of the recognition processing. It is preferable that an amount of data be reduced in as an early stage as possible.

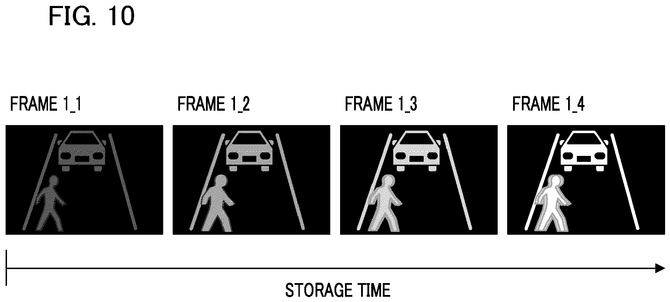

Fig. 10 is a diagram illustrating an example of an image in a plurality of accumulation subperiods according to the first embodiment. In Fig. 10, four frames of three image-recognition images of frame 1_1, frame 1_2, and frame 1_3 and a visual-recognition image of frame 1_4 out of a total of four images acquired in one full frame period (33.3 ms) are illustrated.

As illustrated in Fig. 10, the image of frame 1_1 is dark because an accumulation period thereof is short, but subject blurring of a rushing person is small. On the other hand, the accumulation period increases in the order of frame 1_2, frame 1_3, and frame 1_4, and thus subject blurring is more likely to occur. Blurring is less likely to occur in a stopped vehicle or a white line, and contrast is more likely to be improved as the accumulation period becomes longer.

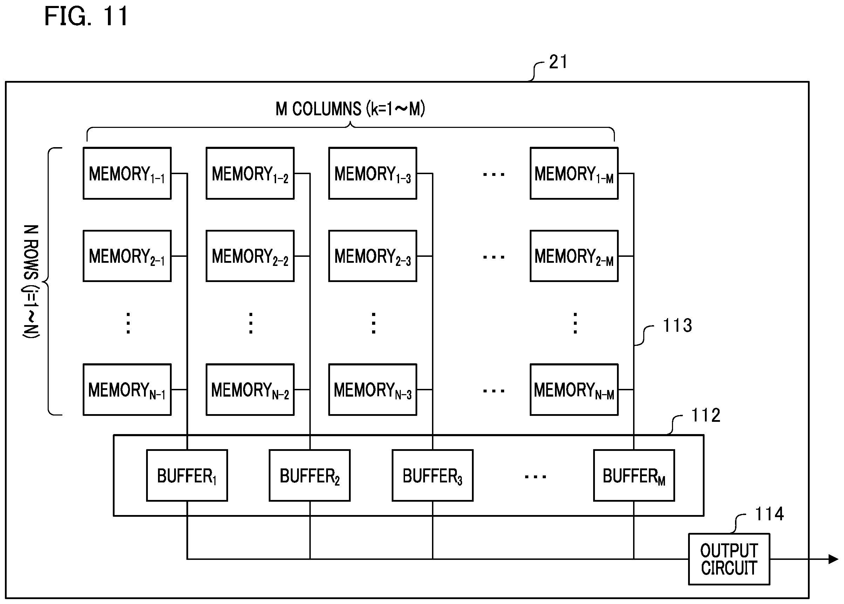

Fig. 11 is a diagram illustrating a relationship between the memory circuit and the buffer according to the first embodiment. In Fig. 11, the memory circuit 212 in the signal processing circuits 103 illustrated in Fig. 3 are arranged in N rows and M columns, and the memory circuits are defined as memories 1-1 to N-M.

Buffers 1 to M in Fig. 11 indicate buffers included in the reading circuit 112 illustrated in Fig. 3. The output circuit 114 illustrated in Fig. 11 corresponds to the output circuit 114 illustrated in Fig. 3.

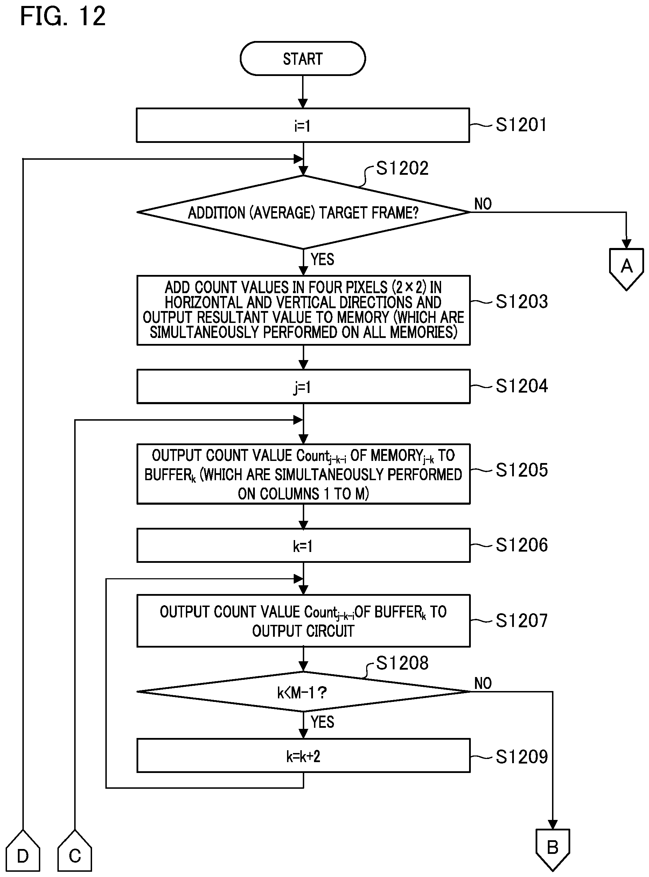

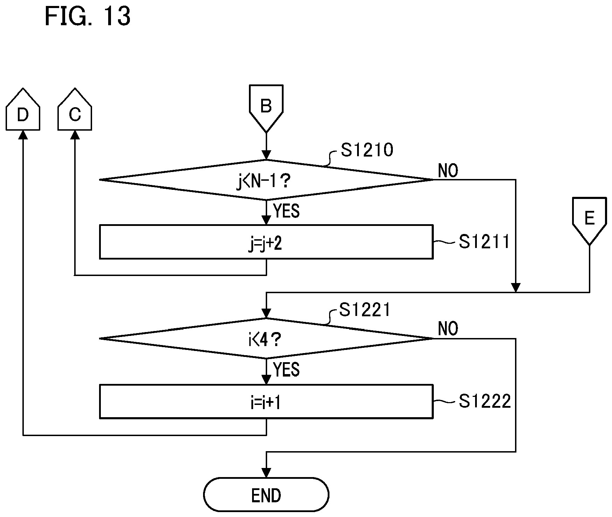

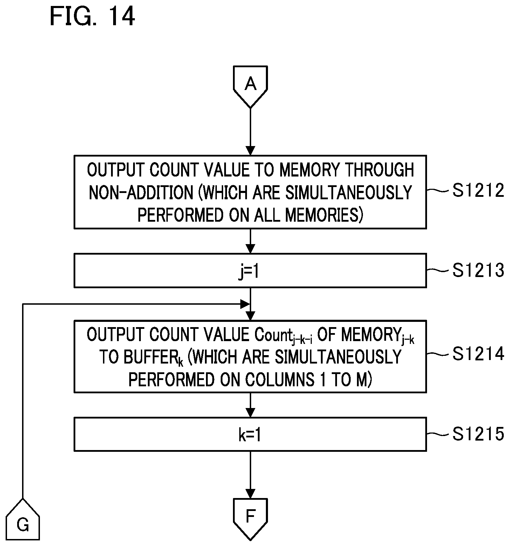

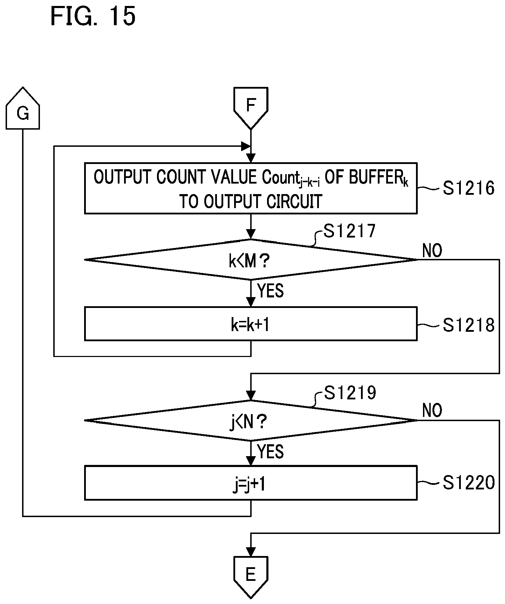

Fig. 12 is a flowchart specifically illustrating a driving example of the photoelectric conversion element according to the first embodiment. Fig. 13 is a flowchart subsequent to the flowchart illustrated in Fig. 12, Fig. 14 is a flowchart subsequent to the flowchart illustrated in Fig. 13, and Fig. 15 is a flowchart subsequent to the flowchart illustrated in Fig. 14. The operations of steps in the flowcharts illustrated in Figs. 12 to 15 are sequentially performed by causing a CPU which is a computer in the camera control unit 606 to execute a computer program stored in a memory.

The CPU of the camera control unit sets i=1 in Step S1201 of Fig. 12 and determines whether a current frame is a frame in which addition processing is to be performed when a count value is output to the memory in Step S1202. In the present embodiment, reading of frames 1_1 to 1_4 is assumed, and a period from time T1 of full frame 1 to time T1 of full frame 2 in Fig. 9 will be described.

That is, the determination result of Step S1202 is YES when i=1 to 3 and is NO when i=4. The determination of Step S1202 may be performed in consideration of preset IDs indicating addition (average) reading, non-addition reading, or the like for each frame or may be performed in consideration of a count value while counting the number of frames.

When it is intended to dynamically switch a frame between addition (average) reading and non-addition reading in one full frame period using an ID, processing can be performed using the same algorithm by assigning IDs for frames again. The process flow proceeds to Step S1203 when the determination result of Step S1202 is YES, and the process flow proceeds to Step S1212 when the determination result of Step S1202 is NO.

Then, in Step S1203, the CPU of the camera control unit outputs a result of addition averaging of a total of four pixels including two pixels in each of a horizontal direction and a vertical direction for the count value Count of the counter circuit 211 at time Ti to the memory circuit 212. In the present embodiment, since monochromatic pixels 101 are assumed, the result of addition averaging of four pixels is output to only the memory circuits 212 in odd-numbered N rows and odd-numbered M columns.

That is, a count value is not present in the memory circuits 212 in odd-numbered N rows or odd-numbered M columns. For example, when a monochromatic filter is not used, but a color filter of a Bayer array of R, Gr, Gb, and B is used, one count value is present for each of four pixels in the horizontal direction and the vertical direction for each color. When the count value is output to the memory circuit 212, the count values are simultaneously output to all the memory circuits. This operation corresponds to the operation of time T1 in Fig. 9.

Then, the CPU of the camera control unit sets j=1 in Step S1204 and outputs a count value Count(j-k-i) in the memory circuit j-k in Fig. 11 to the buffer in Step S1205. At this time, the count values in rows 1 to M are simultaneously output to the buffers.

Since a count value is present in only odd-numbered columns, the number of pieces of data of the count value Count(j-k-i) output actually to the buffers is M/2. That is, the count values in the even-numbered columns may not be output to the buffers. This operation corresponds to an operation of outputting the count value to the buffer in the first row of Fig. 11.

Then, the CPU of the camera control unit sets k=1 in Step S1206 and outputs a count value Count(j-k-i) in the buffer k to the output circuit 114 in Step S1207. This operation corresponds to an operation of reading a signal in the buffer in the leftmost column in Fig. 11 from the output circuit.

Then, the CPU of the camera control unit determined whether k<M-1 is satisfied in Step S1208, increases k by 2 to k=k+2 in Step S1209 when the determination result is YES, and performs the operation of Step S1207 again in Step S1207.

A reason k is not increased by 1 is that a count value is not present in an even-numbered column as described above. This operation corresponds to an operation of reading a signal of a third buffer from the leftmost in Fig. 11 from the output circuit.

When the determination result of Step S1208 is NO, that is, when k=M-1 is satisfied, it means that all the signals in the (M-1)-th buffers in Fig. 11 are read from the output circuit. Then, the process flow proceeds to Step S1210, and the CPU of the camera control unit determines whether j<N-1 is satisfied. When the determination result of Step S1210 is YES, the CPU of the camera control unit increases j by 2 to j=j+2 in Step S1211, and the process flow returns to Step S1205.

When the determination result of Step S1210 is NO, it means that reading of all the rows has ended, and thus the CPU of the camera control unit determines whether i<4 is satisfied in Step S1221. When the determination result of Step S1221 is YES, the CPU of the camera control unit increases i by 1 to i=i+1 in Step S 1222 and the process flow returns to Step S1202. This operation corresponds to an operation of starting reading at next time T2.

In the present embodiment, the process in which the determination result of Step S1202 is YES is repeated three times. That is, a flow of Steps S1203 to S1221 is repeated three times. This operation corresponds to the reading operation of at times T1 to T3. Thereafter, when the process flow returns to Step S1202 in a state in which i=4 is set in Step S1222, the CPU of the camera control unit determines that the determination result of Step S1202 is NO, and the process flow proceeds to Step S1212.

Then, in Step S1212, the CPU of the camera control unit outputs a count value Count in the counter circuit 211 at time Ti to the memory circuit 212 without any change (without performing addition averaging process). At this time, count values are simultaneously output to all the memory circuits. This operation corresponds to the operation at time T4 in Fig. 9.

Then, the CPU of the camera control unit sets j=1 in Step S1213 and outputs a count value Count(j-k-i) in the memory circuit j-k illustrated in Fig. 11 to the buffer in Step S1214. At this time, count values are simultaneously output to the buffers in the columns 1 to M. In Step S1214, unlike Step S1205, a count value is present in all the even-numbered columns and the odd-numbered columns, and the number of pieces of data is M. This operation corresponds to an operation of outputting the count value in the first row in Fig. 11 to the buffer.

Then, the CPU of the camera control unit sets k=1 in Step S1215 and outputs a count value Count(j-k-i) in the buffer k to the output circuit 114 in Step S1216. This operation corresponds to an operation of reading a signal in the buffer in the leftmost column in Fig. 11 from the output circuit.

Then, the CPU of the camera control unit determines whether k<M is satisfied in Step S1217, increases k by 1 to k=k+1 in Step S1218 when the determination result is YES, and performs the operation of Step S1216 again.

Here, k is increased by 2 in Step S1209, but k is increased by 1 in Step S1216 because a count value is present in all the even-numbered columns and the odd-numbered columns as described above. This operation corresponds to an operation of reading a signal in the second buffer from the outermost in Fig. 11 from the output circuit.

When the determination result of Step S1217 is NO, that is, when k=M is satisfied, it means that all the signals in the M-th buffer in Fig. 11 are read from the output circuit, and the CPU of the camera control unit determines whether j<N is satisfied in Step S1219. When the determination result of Step S1219 is YES, the CPU of the camera control unit increases j by 1 to j=j+1 in Step S1220, and the process flow returns to Step S1214. This operation corresponds to an operation of starting reading of a next row.

When the determination result of Step S1219 is NO, it means that reading of all the rows has ended, and thus the CPU of the camera control unit determines whether i<4 is satisfied in Step S1221. Since i=4 is satisfied in the fourth frame, the determination result of Step S1221 is NO.

When the determination result of Step S1221 is NO, it means that reading at time T4 has been completed, thus reading of all the image signals stored in the first full frame is completed, and the process flow illustrated in Fig. 13 ends. As described above, signals stored in the photoelectric conversion element 100 can be sequentially read.

While the present invention has been described above with reference to an exemplary embodiment, the present invention is not limited to the embodiment and can be modified in various forms without departing from the gist of the present invention, and the modifications are not excluded from the scope of the present invention.

For example, a SPAD sensor is used in the aforementioned embodiment, but another sensor such as a CMOS sensor may be used. When the SPAD sensor is used, emission crosstalk that a signal from a neighboring pixel is unintentionally detected due to emission of light in an area with a high electric field may be corrected. At that time, as the method of correcting the emission crosstalk, an existing correction method based on a theoretical value may be used or another method based on measurement results or the like may be used.

### <Second embodiment>

In the first embodiment, the image processing performed by the visual-recognition image processing unit 603 and the image processing performed by the image-recognition image processing unit 604 are fully different, but may be partially shared.

That is, in a second embodiment, the visual-recognition image processing unit and the image-recognition image processing unit share a part. For example, Fig. 16 is a functional block diagram of an example in which the visual-recognition image processing unit 603 and the image-recognition image processing unit 604 are partially shared according to the second embodiment.

By sharing the compression processing 1601 and the black level correction 1602 as illustrated in Fig. 16, it is possible to reduce a circuit scale. At that time, it is preferable that setting parameters of the compression processing 1601 be appropriately changed in a visual-recognition image and an image-recognition image.

Specifically, for example, "no compression processing" is set for a frame of a visual-recognition image, and "compression processing" is set for a frame of an image-recognition image. In this way, the sharing part is set such that the correction parameters are different when visual recognition is performed and when image recognition is performed.

In the aforementioned embodiment, addition averaging of four pixels including two pixels in the horizontal direction and two pixels in the vertical direction are performed in an image-recognition image, but the number of pixels to be addition-averaged may be freely changed in both the horizontal direction and the vertical direction.

When thinning-out reading is performed, the number of pixels to be thinned out or the number of rows (a thinning rate) may be freely changed similarly. In the present embodiment, monochromatic pixels 101 are assumed, but a color filter of a Bayer array of R, Gr, Gb, and B or the like may be provided and processing such as addition averaging or thinning-out in the pixels of the same color may be performed when addition-averaging or thinning-out is performed.

Alternatively, the number of pixels to the addition-averaged at the time of addition (average) reading and the thinning rate at the time of thinning-out reading may be determined according to recognition accuracy in the recognition unit 605. When a resolution of an acquired image is low but the recognition unit 605 can output a recognition result with high accuracy, it is possible to realize an increase in speed by increasing the number of pixels to be added and increasing the thinning rate to reduce the amount of image data. That is, for example, as the recognition accuracy in the recognition unit 605 becomes higher, the number of pixels to be added and the thinning rate may be increased.

Which of addition (average) reading and thinning-out reading is to be used may be determined based on brightness of ambient light. For example, when luminance of ambient light is equal to or greater than a predetermined value, noise sensitivity does not deteriorate remarkably even with a decrease in an amount of signal. Accordingly, when simple thinning-out reading is performed as a reading process and the luminance of ambient light is less than a predetermined value, control may be performed such that thinning-out reading is changed to addition (average) reading in order to enhance noise sensitivity.

The photoelectric conversion device 600 according to the embodiment is not limited to mounting in a movable apparatus, but may be attached to, for example, a wall or a pillar. At that time, it is preferable that an installation height, an installation angle, or the like be stored as installation information in the storage unit 607 or the like when the photoelectric conversion device 600 is attached to a wall, a pillar, or the like.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the present invention.

In addition, the present invention includes those realized using at least one processor or circuit configured to perform functions of the embodiments explained above. For example, a plurality of processors may be used for distribution processing to perform functions of the embodiments explained above.

This application claims the benefit of priority from Japanese Patent Application No. 2023-146835, filed on September 11, 2023, which is hereby incorporated by reference herein in its entirety.

## Claims

1. A photoelectric conversion device comprising:
a photoelectric conversion element configured to generate an image signal corresponding to an incident light quantity;
one or more memories storing instructions; and
one or more processors executing the instructions to:
perform visual-recognition image processing to generate an image for visual recognition,
perform image-recognition image processing to generate an image for image recognition, and
perform control such that image processing is performed on the image signal generated by the photoelectric conversion element using at least one of the visual-recognition image processing and the image-recognition image processing.

2. The photoelectric conversion device according to claim 1, wherein the photoelectric conversion element includes a plurality of pixels of which each includes a photoelectric conversion unit emitting a pulse in response to incidence of photons, a counter counting the number of pulses, and a memory storing a count value of the counter, and
wherein the photoelectric conversion element generates an image signal on the basis of a difference of the count value between a start timing of an accumulation period and an end timing of the accumulation period in each photoelectric conversion unit.

3. The photoelectric conversion device according to claim 1 or claim 2, wherein control is performed such that an image signal generated in an image-recognition accumulation period is output between an end of the image-recognition accumulation period and an end of a visual-recognition accumulation period, one full frame period including the image-recognition accumulation period for generating an image-recognition image and the visual-recognition accumulation period for generating a visual-recognition image.

4. The photoelectric conversion device according to any one of claims 1 to 3, wherein the one or more processors further execute the instructions to generate an image with higher image quality in the visual-recognition image processing than in the image-recognition image processing and to generate an image faster in the image-recognition image processing than in the visual-recognition image processing.

5. The photoelectric conversion device according to any one of claims 1 to 4, wherein the one or more processors further execute the instructions to perform compression for reducing an amount of data of at least the image signal generated by the photoelectric conversion element in the image-recognition image processing.

6. The photoelectric conversion device according to claim 5, wherein the one or more processors further execute the instructions to reduce the amount of data by adding or by thinning out pixel in rows or columns of the photoelectric conversion element addition-averaging pixel values of the plurality of pixels in the compression.

7. The photoelectric conversion device according to any one of claims 5 to 6, wherein the one or more processors further execute the instructions to reduce the amount of data by cutting out pixels in a partial area of the photoelectric conversion element in the image-recognition image processing.

8. The photoelectric conversion device according to any one of claims 1 to 7, wherein the one or more processors further execute the instructions to perform defective pixel correction in the visual-recognition image processing.

9. The photoelectric conversion device according to any one of claims 1 to 8, wherein the one or more processors further execute the instructions to perform black level correction in the image-recognition image processing.

10. The photoelectric conversion device according to any one of claims 1 to 9, wherein the one or more processors further execute the instructions to allow the visual-recognition image processing and the image-recognition image processing to share a processing part.

11. The photoelectric conversion device according to claim 10, wherein the one or more processors further execute the instructions to allow the shared processing part to use different correction parameters when the visual recognition is performed and when the image recognition is performed.

12. The photoelectric conversion device according to any one of claims 1 to 11, wherein the photoelectric conversion element includes an avalanche photodiode.

13. A movable apparatus comprising:
a photoelectric conversion element configured to generate an image signal corresponding to an incident light quantity;
one or more memories storing instructions; and
one or more processors executing the instructions to:
perform visual-recognition image processing to generate an image for visual recognition;
perform image-recognition image processing to generate an image for image recognition; and
perform control such that image processing is performed on the image signal generated by the photoelectric conversion element using at least one of the visual-recognition image processing and the image-recognition image processing and control of an operation of the movable apparatus.

14. A control method of controlling a photoelectric conversion device including:
a photoelectric conversion element configured to generate an image signal corresponding to an incident light quantity;
a visual-recognition image processing unit configured to perform visual-recognition image processing to generate an image for visual recognition; and
an image-recognition image processing unit configured to perform image-recognition image processing to generate an image for image recognition, the control method comprising
performing control such that image processing is performed on the image signal generated by the photoelectric conversion element using at least one of the visual-recognition image processing unit and the image-recognition image processing unit.

15. A non-transitory computer-readable storage medium configured to store a computer program for a photoelectric conversion device,
wherein the photoelectric conversion device includes:
a photoelectric conversion element configured to generate an image signal corresponding to an incident light quantity;
a visual-recognition image processing unit configured to perform visual-recognition image processing to generate an image for visual recognition; and
an image-recognition image processing unit configured to perform image-recognition image processing to generate an image for image recognition, and
wherein the computer program executes the following process: performing control such that image processing is performed on the image signal generated by the photoelectric conversion element using at least one of the visual-recognition image processing unit and the image-recognition image processing unit.
